# EUROPEAN PATENT APPLICATION

(11) **EP 2 706 648 A2**
(43) Date of publication of application: **12.03.2014**
(21) Application number: 13183590.2
(22) Date of filing: 09.09.2013
(51) Int. Cl.: H02K 1/27

(54) **Motor and washing machine having the same**

(30) Priority: 11.09.2012 KR 20120100694
(71) Applicant: Samsung Electronics Co., Ltd, Gyeonggi-do 443-742 (KR)
(72) Inventor: Yoon, Keun Young, Gyeonggi-do (KR); Kim, Young Kwan, Gyeonggi-Do (KR)
(74) Representative: Walaski, Jan Filip

(57) **Abstract**

A motor may adjust interlinkage magnetic flux of a rotor and a stator so as to rotate at high speed by lowering torque during a dehydration operation of a washing machine. The motor includes a rotor in which a plurality of magnets and a plurality of rotor cores are alternately arranged in a circumferential direction of the rotor, the plural magnets being magnetized in the circumferential direction so that the same polarities thereof face each other, a stator around which a coil is wound, and a magnetic flux adjustment member to adjust interlinkage magnetic flux of the rotor and the stator by adjusting leakage magnetic flux. The magnetic flux adjustment member includes a ring-shaped variable magnetic substance, and a pressing member which presses the magnetic substance and varies the shape thereof.

## Description

The present invention relates to a motor capable of varying interlinkage magnetic flux using leakage magnetic flux and a washing machine having the same.

In general, a washing machine includes a tub to store wash water, a drum which is arranged within the tub so as to accommodate laundry, and a motor to rotate the drum through a drive shaft. The washing machine may be a home appliance which may rotate the drum accommodating laundry to wash or dehydrate the laundry.

In the washing machine, a washing operation allows stains to be removed from laundry by rotating the drum at a high torque and low speed in a state in which wash water is stored in the tub. On the contrary, a dehydration operation allows laundry to be dehydrated by rotating the drum at low torque and high speed in a state in which wash water is not stored in the tub.

Accordingly, the motor included in the washing machine needs to have conflicting drive characteristics depending on washing and dehydration operation regions of the washing machine.

Meanwhile, a concentrated flux type motor is a motor which arranges magnets of a rotor so that the same polarities thereof face each other to obtain a concentrated magnetic flux. The concentrated flux type motor is a motor which may generate high torque due to structural characteristics thereof. Thus, washing ability is increased through high torque during the washing operation, whereas it is difficult to obtain the high rate of rotation at the same output during the dehydration operation.

Therefore, study into a structure which may vary magnetic flux to adjust torque is underway for concentrated flux type motors.

Therefore, it is an aspect of the present invention to provide a structure of a concentrated flux type motor which may vary magnetic flux to adjust the torque of the motor depending on whether a washing operation or a dehydration operation is being performed by the washing machine.

Additional aspects of the invention will be set forth in part in the description which follows and, in part, will be apparent from the description, or may be learned by practice of the invention.

In accordance with one aspect of the present invention, a motor includes a stator around which a coil is wound and which generates magnetic flux when current is applied to the coil, a rotor which rotates while electromagnetically interacting with the stator, a plurality of magnets to generate magnetic flux and a plurality of rotor cores to form a magnetic path being alternately arranged in a circumferential direction of the rotor, the plural magnets being magnetized in the circumferential direction so that the same polarities thereof face each other, and a magnetic flux adjustment member to adjust or control (i.e., increase and decrease) interlinkage magnetic flux which is interlinked with the magnetic flux of the stator by increasing and decreasing leakage magnetic flux which is not interlinked with the magnetic flux of the stator among total magnetic flux generated by the magnets.

The magnetic flux adjustment member may include a magnetic substance which is varied in shape, and a pressing member to vary the shape of the magnetic substance. The magnetic substance may have a cut ring shape so as to have both ends which are opened.

The shape of the magnetic substance may be varied between a first shape in which the magnetic substance is minimized in radius to be spaced farthest from the magnets, and a second shape in which the magnetic substance is maximized in radius to be closest to the magnets.

The magnetic substance may be spaced farthest from the magnets when the magnetic substance has the first shape, so that the leakage magnetic flux which is not interlinked with the magnetic flux of the stator is decreased and the interlinkage magnetic flux which is interlinked with the magnetic flux of the stator is increased, among the total magnetic flux generated by the magnets, and the magnetic substance may be closest to the magnets when the magnetic substance has the second shape, so that the leakage magnetic flux which is not interlinked with the magnetic flux of the stator is increased and the interlinkage magnetic flux which is interlinked with the magnetic flux of the stator is decreased, among the total magnetic flux generated by the magnets.

The magnetic substance may be made of an elastic material.

The shape of the magnetic substance may be varied from the first shape to the second shape when the magnetic substance is pressed by the pressing member, and the shape of the magnetic substance may be restored from the second shape to the first shape by an elastic force when pressing of the pressing member is removed.

The magnetic substance may include a fixing end portion which is fixed to the stator, a free end portion, a position of which is varied, and a body portion which connects the fixing end portion and the free end portion.

When the magnetic substance is pressed by the pressing member, the shape of the magnetic substance may be varied by opening a gap between the fixing end portion and the free end portion.

The magnetic substance may further include a stopper portion to limit a rotation range of the pressing member. The stopper portion may protrude radially inwards from the body portion so as to interfere with the pressing member.

The pressing member may include a hinge end portion which is rotatably coupled to the stator, a pressing end portion which presses the magnetic substance, and a connection portion which connects the hinge end portion and the pressing end portion.

The hinge end portion may have a hollow (hollow portion) so that a drive shaft coupled in a shaft hole of the rotor passes through the hollow.

The pressing member may be rotated in a range of about 180°.

The rotor may include an accommodation space which accommodates the magnetic flux adjustment member and is formed radially inward of the plural magnets and the plural rotor cores.

In accordance with another aspect of the present invention, a motor includes a stator around which a coil is wound and which generates magnetic flux, a rotor which has a magnet to generate magnetic flux and rotates while the magnetic flux generated by the magnet is interlinked with magnetic flux of the stator, a ring-shaped magnetic substance which allows the magnetic flux generated by the magnet to not be interlinked with the magnetic flux of the stator, and a pressing member which is rotatably disposed radially inward of the magnetic substance so as to press the magnetic substance and vary a shape thereof.

The shape of the magnetic substance may be varied between a first shape in which the magnetic substance is spaced farthest from the magnet, and a second shape in which the magnetic substance is closest to the magnet, and the magnetic substance may have an increased or decreased radius and a moved central point, instead of maintaining the ring shape, during shape variation. When the magnetic substance has the first shape, the radius of the magnetic substance may be minimized and the central point of the magnetic substance may not coincide with a rotational central point of the pressing member, and when the magnetic substance has the second shape, the radius of the magnetic substance may be maximized and the central point of the magnetic substance may coincide with the rotational central point of the pressing member.

In accordance with a further aspect of the present invention, a washing machine includes a main body, a tub which is disposed within the main body and stores wash water, a drum which is disposed within the tub and is rotatably supported through a drive shaft, and a motor which is mounted to the tub and rotates the drive shaft, wherein the motor includes a stator around which a coil is wound and which generates magnetic flux when current is applied to the coil, a rotor which rotates while electromagnetically interacting with the stator, a plurality of magnets to generate magnetic flux and a plurality of rotor cores to form a magnetic path being alternately arranged in a circumferential direction of the rotor, the plural magnets being magnetized in the circumferential direction so that the same polarities thereof face each other, and a magnetic flux adjustment member to increase and decrease interlinkage magnetic flux which is interlinked with the magnetic flux of the stator by increasing and decreasing leakage magnetic flux which is not interlinked with the magnetic flux of the stator among total magnetic flux generated by the magnets.

The magnetic flux adjustment member may include a magnetic substance which is varied in shape, and a pressing member which is rotatably disposed inside the magnetic substance so as to press the magnetic substance and vary a shape thereof.

The shape of the magnetic substance may be varied between a first shape in which the magnetic substance is minimized in radius to be spaced farthest from the magnets, and a second shape in which the magnetic substance is maximized in radius to be closest to the magnets.

The magnetic substance may be spaced farthest from the magnets when the magnetic substance has the first shape, so that the leakage magnetic flux which is not interlinked with the magnetic flux of the stator is decreased and the interlinkage magnetic flux which is interlinked with the magnetic flux of the stator is increased, among the total magnetic flux generated by the magnets, and the magnetic substance may be closest to the magnets when the magnetic substance has the second shape, so that the leakage magnetic flux which is not interlinked with the magnetic flux of the stator is increased and the interlinkage magnetic flux which is interlinked with the magnetic flux of the stator is decreased, among the total magnetic flux generated by the magnets.

The shape of the magnetic substance may be varied from the first shape to the second shape when the magnetic substance is pressed by the pressing member, and the shape of the magnetic substance may be restored from the second shape to the first shape by an elastic force when pressing of the pressing member is removed.

Torque of the motor may be able to be adjusted by adjusting an amount of interlinkage of the magnetic flux of the magnets and the magnetic flux of the stator using the magnetic flux adjustment member.

The torque of the motor may be increased by an increase in the amount of interlinkage of the magnetic flux during a washing operation, and a rate of rotation of the motor may be increased by a decrease in the amount of interlinkage of the magnetic flux during a dehydration operation.

In accordance with a further aspect of the present invention, a motor may include a stator to generate magnetic flux, a rotor to rotate and electromagnetically interact with the stator, wherein the rotor includes a plurality of magnets to generate magnetic flux, and a magnetic flux adjustment member to adjust an amount of leakage magnetic flux by selectively controlling a shape of the magnetic flux adjustment member.

If the magnetic flux adjustment member is controlled to have a first shape, an amount of the leakage magnetic flux decreases, and if the magnetic flux adjustment member is controlled to have a second shape, an amount of the leakage magnetic flux increases. The magnetic flux adjustment may include a magnetic substance and a pressing member, wherein the magnetic flux adjustment member may be selectively controlled to have the first shape by moving the pressing member to a first location to position the magnetic substance apart from the magnets by a first distance, and the magnetic flux adjustment member may be selectively controlled to have the second shape by moving the pressing member to a second location to position the magnetic substance apart from the magnets by a second distance. The second distance may be less than the first distance.

The pressing member may be rotatably disposed radially inward of the magnetic substance, and a rotation center of the pressing member may be offset from a center of the magnetic substance when the magnetic flux adjustment member is selectively controlled to have the first shape, and the rotation center of the pressing member may correspond to the center of the magnetic substance when the magnetic flux adjustment member is selectively controlled to have the second shape.

These and/or other aspects of the invention will become apparent and more readily appreciated from the following description of the embodiments, taken in conjunction with the accompanying drawings in which:
FIG. 1 is a view schematically illustrating a structure of a washing machine including a motor according to an embodiment of the present invention;
FIG. 2 is a view illustrating a coupling structure of a tub, a magnetic flux adjustment member, and the motor according to the embodiment of the present invention;
FIG. 3 is an exploded view illustrating a stator of the motor according to the embodiment of the present invention, coils being omitted in the drawing;
FIG. 4 is a perspective view illustrating a rotor of the motor according to the embodiment of the present invention;
FIG. 5 is a perspective view illustrating the rotor of the motor according to the embodiment of the present invention, when viewed from another angle;
FIG. 6 is a view for explaining an operation of the magnetic flux adjustment member according to the embodiment of the present invention, a magnetic substance being illustrated in the form of a first shape in the drawing;
FIG. 7 is a view for explaining an operation of the magnetic flux adjustment member according to the embodiment of the present invention, a magnetic substance being illustrated in the form of a second shape in the drawing; and
FIG. 8 is a diagram illustrating a relationship between the rate of rotation and torque of the motor depending on an operation region of the washing machine according to the embodiment of the present invention.

Reference will now be made in detail to the embodiments of the present invention, examples of which are illustrated in the accompanying drawings, wherein like reference numerals refer to like elements throughout.

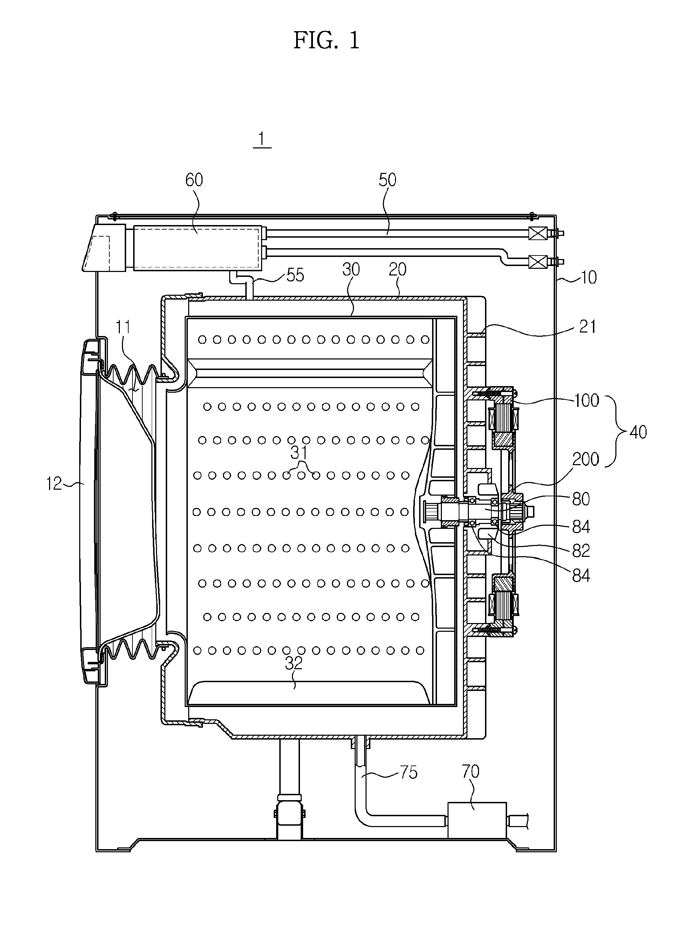

A structure of a washing machine 1 including a motor 40 according to an embodiment of the present invention will be described with reference to FIG. 1. Although not described separately, the motor according to the embodiment of the present invention or the motor including the principle of the present invention may be applied to a variety of machines such as an electric vehicle or a small generator, besides the washing machine disclosed herein which is provided as an example embodiment for which the motor may be incorporated into.

The washing machine 1 includes a cabinet 10 which defines or forms an external appearance thereof, a tub 20 which is arranged within the cabinet 10 and stores wash water, a drum 30 which is rotatably arranged within the tub 20 and into which objects (e.g., laundry such as clothes) are inserted, and a motor 40 to drive the drum 30.

The cabinet 10 may be formed, at a front surface portion thereof, with an insertion port 11 through which laundry may be inserted within the drum 30. The insertion port 11 is opened and closed by a door 12 mounted to the front surface portion of the cabinet 10.

The tub 20 may be installed, at an upper portion thereof, with a water supply tube 50 to supply wash water to the tub 20. The water supply tube 50 is connected, at one side thereof, with an external water supply source (not shown) while being connected, at the other side thereof, with a washing agent supply unit 60. The washing agent supply unit 60 may be connected to the tub 20 through a connection tube 55. Water supplied through the water supply tube 50 may be supplied into the tub 20 together with washing agents via the washing agent supply unit 60.

The tub 20 may be installed, at a lower portion thereof, with a drainage pump 70 and a drainage tube 75 to discharge water within the tub 20 to the outside of the cabinet 10. A plurality of through holes 31, through which wash water passes, may be formed around the drum 30, and a plurality of lifters 32 may be formed on an inner peripheral surface of the drum 30 so that laundry is lifted and dropped during rotation of the drum 30.

The drum 30 may be connected to the motor 40 through a drive shaft 80. The drive shaft 80 transfers a rotational force of the motor 40 to the drum 30. One end of the drive shaft 80 is connected to the drum 30, and the other end thereof passes through a rear wall 21 of the tub 20 to extend outwards.

The rear wall 21 may be provided with a bearing housing 82 so as to rotatably support the drive shaft 80. The bearing housing 82 may be made of metal, (e.g., an aluminum alloy), and be inserted into the rear wall 21 of the tub 20 during injection molding of the tub 20. Bearings 84 are installed between the bearing housing 82 and the drive shaft 80 so that the drive shaft 80 may be smoothly rotated.

Meanwhile, the motor 40 according to the embodiment of the present invention may be a concentrated flux type motor having high torque, and may increase washing ability by rotating the drum 30, into which laundry and wash water are inserted, with sufficient power during a washing operation.

In addition, the motor 40 according to the embodiment of the present invention may have an improved structure capable of obtaining the high rate of rotation at the same output by decreasing torque during a dehydration operation. Therefore, although a concentrated flux type motor of conventional washing machines are unable to satisfy both conflicting drive characteristics required in a washing operation region and a dehydration operation region, the motor 40 according to the embodiment of the present invention may satisfy both conflicting drive characteristics required in a washing operation region and a dehydration operation region of the washing machine.

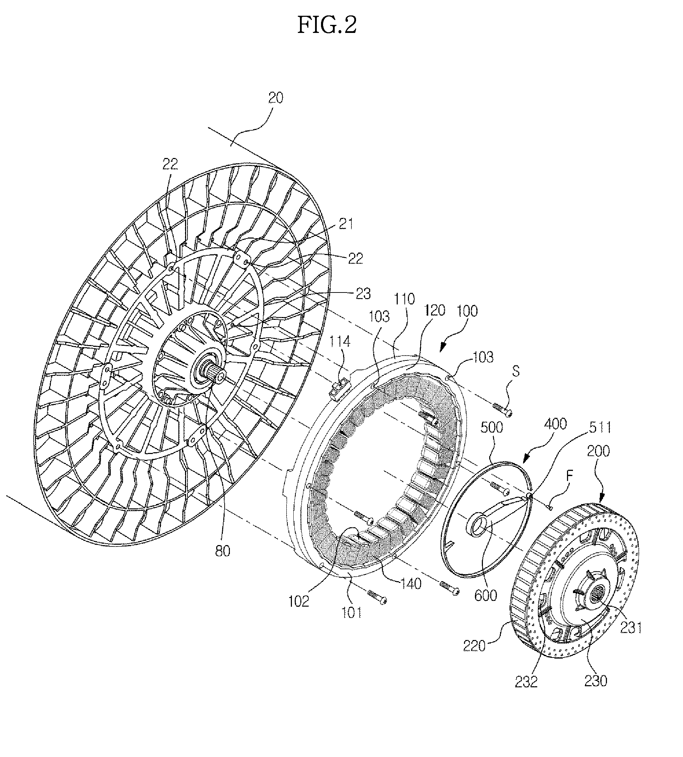

This may be realized by a function or use of a magnetic flux adjustment member 400 (see FIG. 2) included in the motor 40 according to the embodiment of the present invention. The magnetic flux adjustment member 400 has a relatively uncomplicated mechanical structure. Therefore, the magnetic flux adjustment member 400 may be more easily assembled and produced (manufactured).

The following description will be given of a configuration of the motor 40 including the magnetic flux adjustment member 400 according to the embodiment of the present invention.

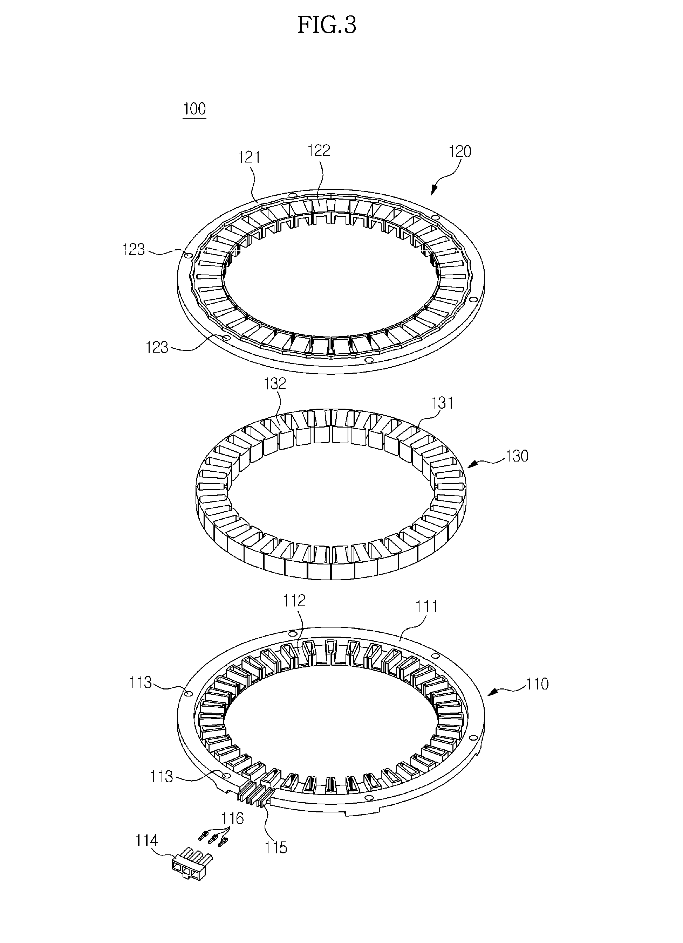

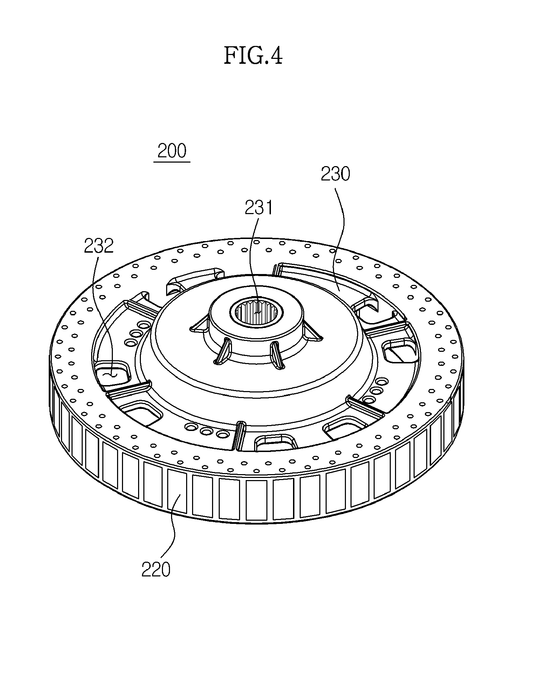

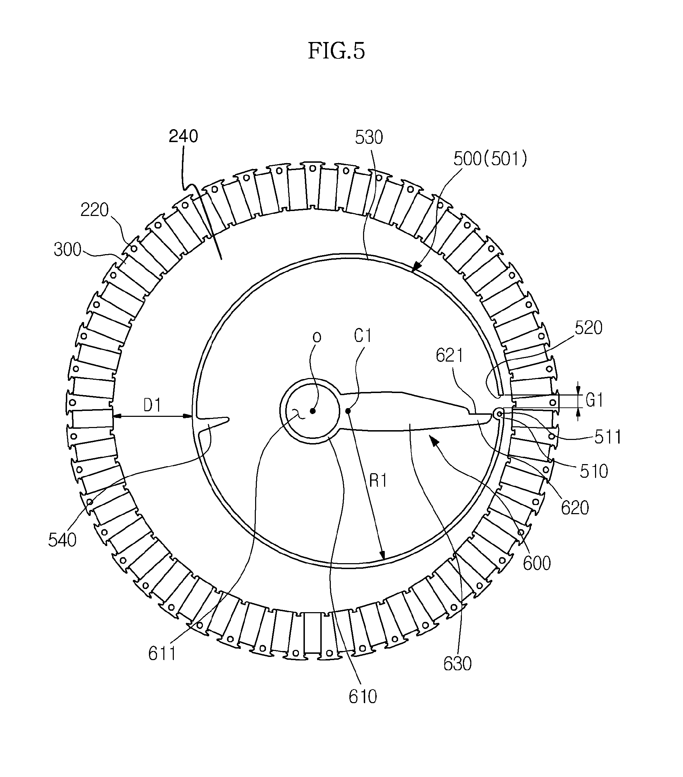

FIG. 2 is a view illustrating a coupling structure of the tub, the magnetic flux adjustment member, and the motor according to an embodiment of the present invention. FIG. 3 is an exploded view illustrating a stator of the motor according to the embodiment of the present invention, the coils being omitted in the drawing for ease of illustration. FIG. 4 is a perspective view illustrating a rotor of the motor according to the embodiment of the present invention. FIG. 5 is a perspective view illustrating the rotor of the motor according to the embodiment of the present invention, when viewed from another angle.

As shown in FIGS. 2 to 5, the motor 40 according to the embodiment of the present invention includes a stator 100 which is mounted to the rear wall 21 of the tub 20, and a rotor 200 which is disposed around of the stator 100 and rotates while electromagnetically interacting with the stator 100.

Although the motor 40 according to an embodiment is an inner rotor type motor in which the rotor 200 is disposed within the stator 100, the present invention is not limited thereto. For example, the present invention is also applicable to an outer rotor type motor in which the rotor is disposed outside the stator.

As shown in FIG. 2, the stator 100 may include a circular stator body 101, a plurality of stator teeth 102 which protrudes inward of the stator body 101 (i.e., toward a center of the circular stator body 101), coils 140 which are wound around the plural stator teeth 102, and a plurality of fastening holes 103 to fix the stator 100 to the rear wall 21 of the tub 20.

The stator body 101 supports the plural stator teeth 102. The plural stator teeth 102 protrude toward a center of the stator body 101 from an inner peripheral surface thereof, and are arranged at certain intervals in a circumferential direction of the stator body 101. By way of example, the plural stator teeth 102 may be even spaced about in a circumferential direction with respect to the stator body 101.

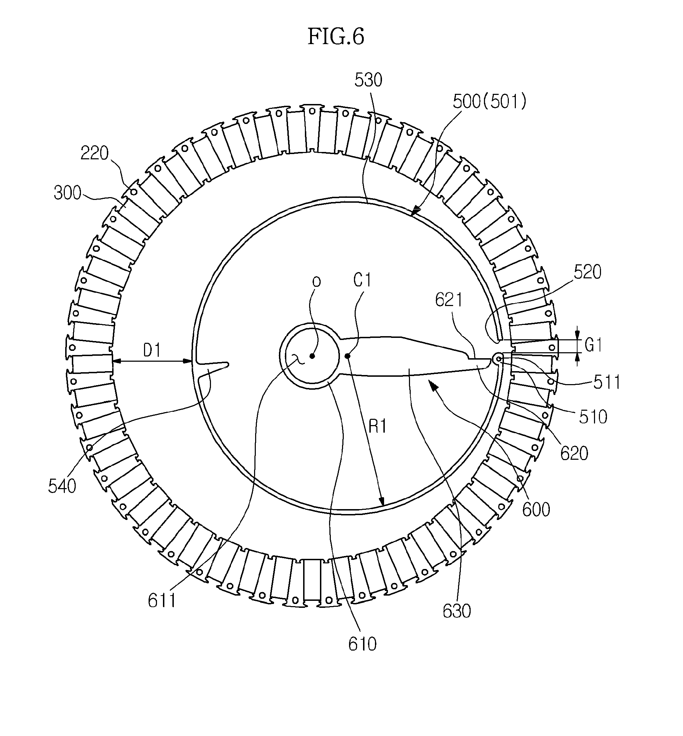

Rotating magnetic flux may be generated when current is applied to the coils 140 wound around the plural stator teeth 102 and polarities of the coils 140 are sequentially varied. The rotating magnetic flux and magnetic flux which is formed by the rotor 200 and magnets 300 (see FIG. 6) may act on each other. Accordingly, the rotor 200 may be rotated by repulsive forces or attractive forces due to the polarities.

The rear wall 21 of the tub 20 may be formed with a plurality of fastening holes 22, and fastening members S are fastened in the fastening holes 103 of the stator 100 and the fastening holes 22 of the tub 20, and thus the stator 100 may be fixed to the tub 20.

An exploded configuration of the stator 100 will be described with reference to FIG. 3. The stator 100 may be formed by coupling a stator core 130 which may be made of a metal material which forms a path of magnetic flux (magnetic path) and insulators 110 and 120 which cover the stator core 130 so as to insulate the stator core 130 and the coils 140. The insulators 110 and 120 may include a first insulator 110 which covers one side of the stator core 130, and a second insulator 120 which covers the other side of the stator core 130.

The stator core 130 includes a core body 131 having a substantially ring or circular shape, and a plurality of core teeth 132 which protrude toward a center of the core body 131 from an inner peripheral surface thereof. The stator core 130 may be formed by stacking press-worked steel plates.

The first and second insulators 110 and 120 may include insulator bodies 111 and 121 which cover the stator core 130 and have a substantially ring or circular shape, and a plurality of insulator teeth 112 and 122 which protrude toward centers of the insulator bodies 111 and 121 from inner peripheral surfaces thereof, respectively. The insulator teeth 112 and 122 may be coupled with the core teeth 132 to form the stator teeth 102 around which the coils 140 are wound.

The first and second insulators 110 and 120 may have fastening holes 113 and 123 for coupling with the tub 20, respectively. The fastening holes 113 of the first insulator 110 are coupled to the fastening holes 123 of the second insulator 120 to form the fastening holes 103 of the stator 100.

Meanwhile, the first insulator 110 may be formed with a connector housing 115 into which a connector 114 to supply electric power is inserted, so that current may flow in the coils 140 wound around the stator teeth 102. Connection terminals 116, which may be made of a metal material, electrically connect the coils 140 and the connector 114, and may be inserted into the connector housing 115.

The first and second insulators 110 and 120 may be made of a material having electric insulation so as to insulate the stator core 130 and the coils 140.

As shown in FIGS. 2 and 4 to 7, the rotor 200 may include a plurality of rotor cores 220 made of a metal material which forms a magnetic path, a plurality of magnets 300 which is disposed between the respective rotor cores 220 to generate magnetic flux, and a molding portion 230 to support the plural rotor cores 220 and the plural magnets 300.

The rotor 200 may be formed by injection molding of the molding portion 230 after assembling and inserting the plural rotor cores 220 and the magnets 300. As shown in FIGS. 2, 4, and 5, due to the molding portion 230, a portion of each of the rotor cores 220 is exposed around the rotor 200 and the magnets 300 are not exposed to the outside.

The rotor cores 220 may form the magnetic path and simultaneously support the magnets 300. The plural rotor cores 220 are arranged along a circumferential direction of the rotor 200, and the magnets 300 are arranged between the respective rotor cores 220. Thus, the rotor cores 220 and magnets 300 are alternately arranged along the circumferential direction. The rotor cores 200 may be formed by stacking sheet metal formed by press working of silicon steel plates.

Each of the magnets 300 may include a rare earth element such as ferrite, neodymium, or samarium which may semipermanently maintain magnetic properties having high energy density. Each magnet 300 may be magnetized along the circumferential direction. In addition, two adjacent magnets 300 may be magnetized so that the same polarities thereof face each other. That is, any two adjacent magnets may have an opposite polarity with respect to one another.

Due to such a structure, magnetic flux generated by the magnets 300 may be concentrated, and the motor 40 may generate high torque by the concentrated magnetic flux since torque of the motor 40 is proportional to interlinkage magnetic flux of the stator 100 and the rotor 200.

The molding portion 230 may include a shaft hole 231 in which the drive shaft 80 is coupled, and heat radiation holes 232 to radiate heat generated during rotation of the rotor 200. As comparatively shown in FIGS. 4 and 5, the molding portion 230 may be formed such that one side thereof directed toward the tub 20 of the rotor 200 is opened and the other side thereof is closed.

Meanwhile, an accommodation space 240 (see FIG. 5), which may accommodate the magnetic flux adjustment member 400, may be formed radially inward of the plural rotor cores 220 and the plural magnets 300 which are alternately arranged in the circumferential direction. Accordingly, one surface (or end) of the accommodation space 240 which is directed toward the tub 20 may be opened, and the other opposite surface (or end) thereof may be covered by the molding portion 230.

The magnetic flux adjustment member 400 may adjust magnetic flux of the rotor 200 and interlinkage magnetic flux of the stator 100 using leakage magnetic flux. Here, the interlinkage magnetic flux may refer to magnetic flux which is interlinked with magnetic flux of the stator 100 among the magnetic flux of the rotor 200 and effectively generates rotation of the rotor 200. The leakage magnetic flux may refer to magnetic flux which is not interlinked with magnetic flux of the stator 100 among the magnetic flux of the rotor 200.

The total magnetic flux generated by the magnets 300 may be constant or substantially constant. Thus, when the leakage magnetic flux is varied, the interlinkage magnetic flux may be varied to the varied extent. Consequently, the magnetic flux adjustment member 400 according to the embodiment of the present invention may adjust the interlinkage magnetic flux by adjustment of the leakage magnetic flux.

The magnetic flux adjustment member 400 may be mounted to the rear wall 21 of the tub 20 and be accommodated in the accommodation space 240 of the rotor 200. The magnetic flux adjustment member 400 may include a magnetic substance 500 which may be varied in shape, and a pressing member 600 to vary the shape of the magnetic substance 500.

The magnetic substance 500 may have a fixing hole 511. A fixing member F may be fastened in the fixing hole 511 of the magnetic substance 500 and a fixing hole 23 formed on the rear wall 21 of the tub 20, thereby enabling the magnetic substance 500 to be mounted to the rear wall 21 of the tub 20. The pressing member 600 may be rotatably coupled to the rear wall 21 of the tub 20.

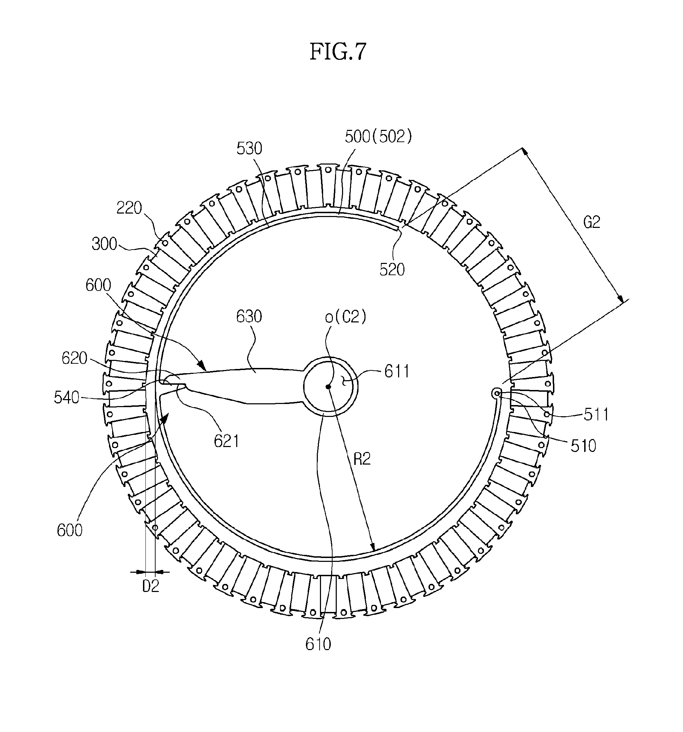

A configuration of the magnetic flux adjustment member 400 will be described with reference to FIGS. 6 and 7. FIG. 6 is a view for explaining an operation of the magnetic flux adjustment member according to an embodiment of the present invention, the magnetic substance being illustrated in the form of a first shape in the drawing. FIG. 7 is a view for explaining an operation of the magnetic flux adjustment member according to an embodiment of the present invention, the magnetic substance being illustrated in the form of a second shape in the drawing.

The magnetic substance 500 allows magnetic flux generated by the magnets 300 to leak, and is disposed inside the rotor 200. The magnetic flux generated by the magnets 300 may leak without interlinkage with the magnetic flux of the stator 100 by interlinkage with the magnetic substance 500. As the magnetic substance 500 approaches the magnets 300, the leakage magnetic flux may increase and the interlinkage magnetic flux may decrease. As the magnetic substance 500 moves away from the magnets 300, the leakage magnetic flux may be decreased and the interlinkage magnetic flux may increase.

The magnetic substance 500 may have a cut ring shape in which both ends 510 and 520 thereof are opened without being connected. The both ends 510 and 520 of the magnetic substance 500 may include a fixing end portion 510 which is fixed to the tub 20 and a free end portion 520, a position of which may be freely shifted. The fixing end portion 510 may be provided with the fixing hole 511 in which the fixing member F is fastened to fix the fixing end portion 510 to the tub 20. The fixing end portion 510 and the free end portion 520 are connected by a ring-shaped body portion 530.

The magnetic substance 500 may include a stopper portion 540 to limit a rotation range of the pressing member 600. The stopper portion 540 may protrude radially inwards from the body portion 530 (i.e., toward a rotation center O of the rotor 200). The magnetic substance 500 may be made of a material which may be varied in shape and have an elastic force. The magnetic substance 500 may be varied in shape while maintaining the ring shape as it is. The magnetic substance 500 may be varied so that a radius thereof is increased by pressing the pressing member 600. The magnetic substance 500 may be restored to an original state by an elastic force when the pressing of the pressing member 600 is removed.

The pressing member 600 serves to vary the shape of the magnetic substance 500 by pressing the magnetic substance 500, and is rotatably disposed radially inward of the magnetic substance 500. The pressing member 600 is disposed radially inward of the magnetic substance 500 so that a rotation center O of the pressing member 600 coincides with the rotation center O of the rotor 200.

The pressing member 600 includes a hinge end portion 610 which may be rotatably coupled to the rear wall 21 of the tub 20, a pressing end portion 620 which comes into contact with an inner peripheral surface of the magnetic substance 500 to press the magnetic substance 500, and a connection portion 630 which connects the hinge end portion 610 and the pressing end portion 620.

The hinge end portion 610 may be formed with a hollow portion 611 so that the drive shaft 80 to connect the drum 30 and the rotor 200 may pass through the hollow portion 611. The drive shaft 80 and the hollow portion 611 are slightly spaced apart from each other, or are connected by bearings (not shown) or the like, with the consequence that rotation of the drive shaft 80 does not interfere with rotation of the pressing member 600.

The pressing end portion 620 may be formed with a catching surface 621 which interferes with the stopper portion 540 of the magnetic substance 500.

The pressing member 600 is not limited as to materials. The pressing member 600 may be made of any material having a sufficient stiffness so as to press the magnetic substance 500 and may be variously formed of an injection molded product, metal, etc. The motor 40 may include a drive unit (not shown) to rotate the pressing member 600 and a control unit (not shown) to control the drive unit. The drive unit may include a motor, a gear, bearings, and the like, and may be formed in various shapes using known technologies. The control unit may cause the pressing member 600 to be rotated so as to vary the magnetic substance 500 to a first shape when a washing operation begins, and may cause the pressing member 600 to be rotated so as to vary the magnetic substance 500 to a second shape when a dehydration operation begins.

When the pressing member 600 rotates about the hinge end portion 610, the pressing member 600 may press the magnetic substance 500 to thereby vary the shape of the magnetic substance 500. The shape of the magnetic substance 500 may be varied between the first shape in which the magnetic substance 500 is located at the farthest position from the magnets 300 and thus the leakage magnetic flux is smallest (i.e., minimized) and the interlinkage magnetic flux is largest (i.e., maximized), and the second shape in which the magnetic substance 500 is located at the closest position to the magnets 300 and thus the leakage magnetic flux is largest (i.e., maximized) and the interlinkage magnetic flux is smallest (i.e., minimized).

Shape variation of the magnetic substance 500 depending on the rotation of the pressing member 600 will be described with reference to comparative FIGS. 6 and 7. In FIGS. 6 and 7, the magnetic substance of the first shape is denoted by reference numeral 501, and the magnetic substance of the second shape is denoted by reference numeral 502.

As shown in FIG. 6, the magnetic substance 501 has the first shape in a state in which an external force is not present. In this case, a radius R1 of the magnetic substance 501 is minimized, and a central point C1 of the magnetic substance 501 is deviated from a central point O of each of the pressing member 600 and the rotor 200.

In addition, a distance D1 between the magnetic substance 501 and the magnets 300 is longest. Thus, the leakage magnetic flux is minimized and the interlinkage magnetic flux is maximized. Here, for convenience of comparison, the distance D1 between the magnetic substance 501 and the magnets 300 is to be indicated on the basis of the longest distance among distances between the magnetic substance 501 and the magnets 300. Here, D1 may be a distance measured from a point on the magnetic substance 501 which is substantially diametrically opposite of the fixing end portion 510. Or, D1 may be a distance measured from a point on the magnetic substance 501 which corresponds to a location of the stopper portion 540.

When the pressing member 600 begins to rotate in a state in which the magnetic substance 501 has the first shape, the pressing member 600 presses the inner peripheral surface of the magnetic substance 501, and thus the shape of the magnetic substance 501 is varied. The pressing member 600 may be rotated about the hinge end portion 610 in a clockwise or counterclockwise direction.

The pressing member 600 may be rotated in an approximately angular range of 180°. The radius R1 of the magnetic substance 501 is gradually increased and a gap G1 between the fixing end portion 510 and the free end portion 520 is also gradually increased, depending on rotation of the pressing member 600. In addition, the central point C1 of the magnetic substance 501 is moved to be close to the central point O of each of the pressing member 600 and the rotor 200, and the distance D1 between the magnetic substance 501 and the magnets 300 become smaller.

As a result, when the pressing member 600 is fully rotated at an approximate angle of 180°, the magnetic substance 502 is varied to the second shape, as shown in FIG. 7.

When the magnetic substance 502 has the second shape, a radius R2 of the magnetic substance 502 is maximized, and a central point C2 of the magnetic substance 502 coincides with the central point O of each of the pressing member 600 and the rotor 200. In addition, a gap G2 between the fixing end portion 510 and the free end portion 520 is maximized, and a distance D2 between the magnetic substance 502 and the magnets 300 is minimized. Here, D2 may be a distance measured from a point on the magnetic substance 501 which is substantially diametrically opposite of the fixing end portion 510. Or, D2 may be a distance measured from a point on the magnetic substance 501 which corresponds to a location of the stopper portion 540 which interferes with or contacts the catching surface 621 of the pressing end portion 620 of the pressing member 600. Consequently, the leakage magnetic flux is maximized and the interlinkage magnetic flux is minimized.

Meanwhile, when the magnetic substance 502 has the second shape, an elastic force of the magnetic substance 502 is maximized. Accordingly, when the pressing of the pressing member 600 acting on the magnetic substance 502 is removed while the pressing member 600 is rotated to an original position again, the magnetic substance 502 is restored to the first shape by the elastic force.

As described above, the magnetic flux adjustment member according to the embodiment of the present invention has a relatively uncomplicated configuration which includes the magnetic substance 500 made of an elastic material, and the pressing member 600 which presses the magnetic substance 500 to vary the shape of the magnetic substance 500. Accordingly, it may be possible to improve or make easier the assembly and production of the magnetic flux adjustment member 400. Further, the interlinkage magnetic flux may be adjusted by a simple operation.

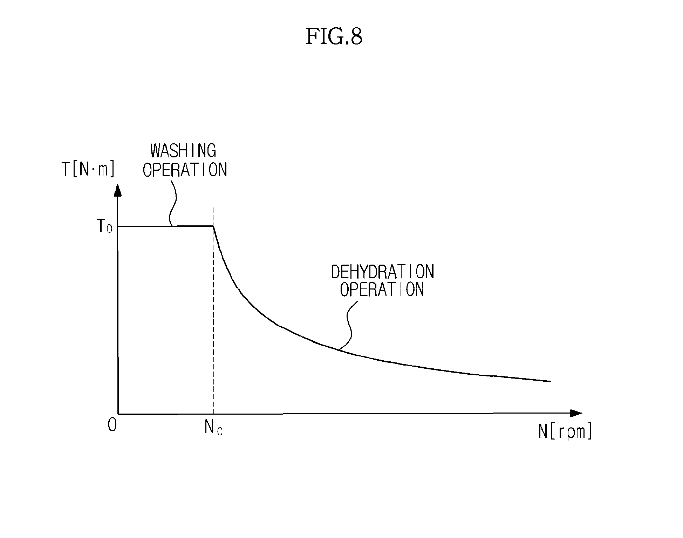

FIG. 8 is a diagram illustrating a relationship between the rate of rotation and torque of the motor depending on an operation region of the washing machine according to the embodiment of the present invention. In the graph of FIG. 8, the x-axis refers to the rate of rotation N (revolutions per minute) of the motor, and the y-axis refers to the torque T of the motor (N • m).

The motor rotates at a substantially constant torque during the washing operation of the washing machine. The output of the motor is proportional to the product of torque and a rate of rotation. Therefore, when the rate of rotation is increased while the torque is kept constant, the output of the motor is also increased, and when the torque is To and the rate of rotation is No, the output of the motor is maximized. That is, since there is a limit to the output of the motor, the maximum rate of rotation which may be obtained by the torque of To may be referred to as No.

Since the high rate of rotation is required during the dehydration operation, the interlinkage magnetic flux should be decreased through the magnetic flux adjustment member at the beginning of the dehydration operation.

As described above, the magnetic flux adjustment member includes the magnetic substance and the pressing member. Accordingly, in the magnetic flux adjustment member, the pressing member is rotated and thus the magnetic substance approaches the magnets, with the consequence that the interlinkage magnetic flux may be decreased.

Since the output of the motor is proportional to the interlinkage magnetic flux, the output of the motor may be decreased depending on the decrease of the interlinkage magnetic flux. Therefore, since the torque is lowered at a constant output, it may be possible to increase the rate of rotation and efficiency of the dehydration operation. As is apparent from the above description, interlinkage magnetic flux of a rotor and a stator may be adjusted using leakage magnetic flux in a concentrated flux type motor. Accordingly, in a washing machine, it may be possible to increase washing efficiency by rotating a drum at high torque during a washing operation, and to enhance dehydration efficiency by rotating the drum at high speed during a dehydration operation.

In addition, a magnetic flux adjustment member to adjust the interlinkage magnetic flux of the rotor and the stator has an uncomplicated mechanical structure, thereby improving making it easier to assemble and produce the magnetic flux adjustment member.

The disclosure herein has provided example embodiments of a motor usable with a washing machine and a washing machine having the same. However the disclosure is not limited to particular embodiments described herein. For example, although the motor has been described as being applicable to the washing machine shown in FIG. 1, it may be applied to other types of washing machines, for example, a top loading washing machine. Further, the motor may be applied to other types of machines, for example, an air conditioner, an electric vehicle, a light rail vehicle, and an electric bicycle, a small generator, and the like.

The motor usable with a washing machine and a washing machine according to the above-described example embodiments may use one or more processors, which may include a microprocessor, central processing unit (CPU), digital signal processor (DSP), or application-specific integrated circuit (ASIC), as well as portions or combinations of these and other processing devices. For example, the control unit may use one or more processors to control an operation, position, or shape of the pressing member to vary the magnetic substance according to a desired operation of the motor, which may be disposed in a washing machine.

Although a few embodiments of the present invention have been shown and described, it would be appreciated by those skilled in the art that changes may be made in these embodiments without departing from the principles of the invention, the scope of which is defined in the claims.

## Claims

1. A motor comprising:
a stator around which a coil is wound and which generates magnetic flux when current is applied to the coil;
a rotor which rotates while electromagnetically interacting with the stator, a plurality of magnets to generate magnetic flux and a plurality of rotor cores to form a magnetic path being alternately arranged in a circumferential direction of the rotor, the plural magnets being magnetized in the circumferential direction so that the same polarities thereof face each other; and
a magnetic flux adjustment member to increase and decrease interlinkage magnetic flux which is interlinked with the magnetic flux of the stator by increasing and decreasing leakage magnetic flux which is not interlinked with the magnetic flux of the stator among total magnetic flux generated by the magnets.

2. The motor according to claim 1, wherein the magnetic flux adjustment member comprises a magnetic substance which is varied in shape, and a pressing member to vary the shape of the magnetic substance.

3. The motor according to claim 2, wherein the magnetic substance has a first end and a second end, and has a cut ring shape so as to have both ends which are opened.

4. The motor according to claim 2 or 3, wherein the shape of the magnetic substance is varied between a first shape in which the magnetic substance is minimized in radius to be spaced farthest from the magnets, and a second shape in which the magnetic substance is maximized in radius to be closest to the magnets.

5. The motor according to claim 4, wherein:
the magnetic substance is spaced farthest from the magnets when the magnetic substance has the first shape, so that the leakage magnetic flux which is not interlinked with the magnetic flux of the stator is decreased and the interlinkage magnetic flux which is interlinked with the magnetic flux of the stator is increased, among the total magnetic flux generated by the magnets; and
the magnetic substance is closest to the magnets when the magnetic substance has the second shape, so that the leakage magnetic flux which is not interlinked with the magnetic flux of the stator is increased and the interlinkage magnetic flux which is interlinked with the magnetic flux of the stator is decreased, among the total magnetic flux generated by the magnets.

6. The motor according to claim 4 or 5, wherein the magnetic substance is made of an elastic material.

7. The motor according to claim 6, wherein the shape of the magnetic substance is varied from the first shape to the second shape when the magnetic substance is pressed by the pressing member, and the shape of the magnetic substance is restored from the second shape to the first shape by an elastic force when pressing of the pressing member is removed.

8. The motor according to any one of claims 2 to 7, wherein the magnetic substance comprises a fixing end portion which is fixed to the stator, a free end portion, a position of which is varied, and a body portion which connects the fixing end portion and the free end portion.

9. The motor according to claim 8, wherein, when the magnetic substance is pressed by the pressing member, the shape of the magnetic substance is varied by opening a gap between the fixing end portion and the free end portion.

10. The motor according to claim 8 or 9, wherein the magnetic substance further comprises a stopper portion to limit a rotation range of the pressing member.

11. The motor according to claim 10, wherein the stopper portion protrudes radially inwards from the body portion so as to interfere with the pressing member.

12. The motor according to any one of claims 2 to 7, wherein the pressing member comprises a hinge end portion which is rotatably coupled to the stator, a pressing end portion which presses the magnetic substance, and a connection portion which connects the hinge end portion and the pressing end portion.

13. The motor according to claim 12, wherein the hinge end portion has a hollow portion so that a drive shaft coupled in a shaft hole of the rotor passes through the hollow portion.

14. The motor according to claim 2, wherein the pressing member is rotated in a range of about 180°.

15. The motor according to any one of the preceding claims, wherein the rotor comprises an accommodation space which accommodates the magnetic flux adjustment member and is formed radially inward of the plural magnets and the plural rotor cores.
